# EUROPEAN PATENT SPECIFICATION

(11) **EP 2 223 595 B1**
(45) Date of publication and mention of the grant of the patent: **21.08.2013**
(21) Application number: 10153375.0
(22) Date of filing: 11.02.2010
(51) Int. Cl.: A01M 29/00, A01K 79/02

(54) **System and Method for Using Electropositive Metals for Protecting Towed Marine Seismic Equipment from Shark Bite**
System und Verfahren zur Verwendung von elektropositiven Metallen zum Schutz von gezogenen, marine-seismischen Ausrüstungen gegen Haibisse
Système et méthode d'utilisation de métaux électropositifs pour protéger des équipements marines sismiques contre les morceaux de requins

(30) Priority: 23.02.2009 US 208328 P; 19.10.2009 US 589134
(43) Date of publication of application: 01.09.2010
(73) Proprietor: PGS Geophysical AS, 1366 Lysaker (NO)
(72) Inventor: HARRICK, Bruce William, Sugar Land, TX 77498 (US)
(74) Representative: Skone James, Robert Edmund

(56) References cited:
- EP-A1- 1 027 618
- WO-A2-2006/099131
- STONER, A.W.; KAIMMER, S.M.: "Reducing elasmobranch bycatch: Laboratory investigation of rare earth metal and magnetic deterrents with spiny dogfish and Pacific" FISHERIES RESEARCH, vol. 92, no. 2-3, 1 August 2008 (2008-08-01), pages 162-168, XP002608504 ISSN: 0165-7836
- KAIMMER,S.; STONER,A.W.: "Field investigation of rare-earth metal as a deterrent to spiny dogfish in the Pacific halibut fishery" FISHERIES RESERACH, vol. 94, no. 1, 1 October 2008 (2008-10-01), pages 43-47, XP002608521 ISSN: 0165-7836

## Description

### 1. Field of the Invention

This invention relates generally to the field of geophysical prospecting. More particularly, the invention relates to the field of marine seismic surveys with towed seismic equipment.

### 2. Description of the Related Art

In the oil and gas industry, geophysical prospecting is commonly used to aid in the search for and evaluation of subterranean formations. Geophysical prospecting techniques yield knowledge of the subsurface structure of the earth, which is useful for finding and extracting valuable mineral resources, particularly hydrocarbon deposits such as oil and natural gas. A well-known technique of geophysical prospecting is a seismic survey.

The resulting seismic data obtained in performing a seismic survey is processed to yield information relating to the geologic structure and properties of the subterranean formations in the area being surveyed. The processed seismic data is processed for display and analysis of potential hydrocarbon content of these subterranean formations. The goal of seismic data processing is to extract from the seismic data as much information as possible regarding the subterranean formations in order to adequately image the geologic subsurface. In order to identify locations in the Earth's subsurface where there is a probability for finding petroleum accumulations, large sums of money are expended in gathering, processing, and interpreting seismic data. The process of constructing the reflector surfaces defining the subterranean earth layers of interest from the recorded seismic data provides an image of the earth in depth or time. The image of the structure of the Earth's subsurface is produced in order to enable an interpreter to select locations with the greatest probability of having petroleum accumulations.

In a marine seismic survey as seen in GB 2329369, seismic energy sources are used to generate a seismic signal which, after propagating into the earth, is at least partially reflected by subsurface seismic reflectors. Such seismic reflectors typically are interfaces between subterranean formations having different elastic properties, specifically sound wave velocity and rock density, which lead to differences in acoustic impedance at the interfaces. The reflected seismic energy is detected by seismic sensors (also called seismic receivers) and recorded.

The appropriate seismic sources for generating the seismic signal in marine seismic surveys typically include a submerged seismic source towed by a ship and periodically activated to generate an acoustic wavefield. The seismic source generating the wavefield is typically an air gun or a spatially-distributed array of air guns.

The appropriate types of seismic sensors typically include particle velocity sensors (known in the art as geophones) and water pressure sensors (known in the art as hydrophones) mounted within a towed seismic streamer (also know as a seismic cable). Seismic sensors may be deployed by themselves, but are more commonly deployed in sensor arrays within the streamer.

Seismic sources, seismic streamers, and other attached equipment are towed behind survey vessels, attached by cables. The seismic sources and seismic streamers may be positioned in the water by attached equipment, such as deflectors and cable positioning devices (also known as "birds").

The class Chondrichthyes (fish with cartilaginous skeletons) comprises sharks, rays, skates, and Chimaera (ghost) sharks, with the subclass Elasmobranches comprising sharks, rays, and skates. Some of these sharks occasionally attack and bite the towed marine seismic equipment used in marine seismic surveys employing towed seismic streamers.

A need exists for a system and a method for protecting towed seismic equipment in marine seismic surveys, especially towed streamers and equipment attached thereto, from bites by sharks or other elasmobranches.
EP-A-1027618 discloses that the lead-ins used to tow seismic streamers are sometimes damaged in use by, for example, shark bites. The solution proposed is to use fewer lead-ins, one lead-in per several streamers instead of the conventional practice of using one lead-in per streamer.
Stoner, A.W.; Kaimer, S.M., 1 August 2008, "Reducing elasmobranch bycatch: Laboratory investigation of rare earth metal and magnetic deterrents with spiny dogfish and Pacific halibut", Fisheries Research, vol. 92, no. 2-3, p. 162-168, discloses laboratory tests showing that attaching small metal plates (35 mm x 60 mm x 3 mm) of cerium mischmetal, a rare earth metal alloy, to baited fishing hooks deters spiny dogfish (a shark common in halibut fishing grounds) to some extent from biting the hooks. Additional tests show that the cerium mischmetal plates substantially dissolve in seawater in days. Protection of towed marine seismic equipment is not discussed.
Kaimer, S.M.; Stoner, A.W., 1 October 2008, "Field investigation of rare earth metal as a deterrent to spiny dogfish in the Pacific halibut fishery", Fisheries Research, vol. 94, no. 1, p. 43-47, discloses field tests showing that attaching small triangular pieces (50 mm on a side, 6.3 mm thick) of cerium mischmetal to baited fishing hooks on a commercial fishing long-line deterred spiny dogfish to a lesser extent than in the previous laboratory tests, discussed above. Protection of towed marine seismic equipment is not discussed.

### BRIEF SUMMARY OF THE INVENTION

The invention is a system and a method for protecting towed marine seismic equipment from shark bite. In one embodiment, the invention is a system comprising marine seismic equipment adapted for towing through a body of water and an electropositive metal attached to the marine seismic equipment, wherein the attached electropositive metal is configured as a surface covering. In another embodiment, the invention is a method comprising towing marine seismic equipment having an electropositive metal attached thereto, wherein the attached electropositive metal is configured as a surface covering.

### BRIEF DESCRIPTION OF THE DRAWINGS

The invention and its advantages may be more easily understood by reference to the following detailed description and the attached drawings, in which:

**FIG. 1** is a schematic plan view of marine seismic survey equipment used with towed streamers;

**FIG. 2** is a schematic side view of marine seismic survey equipment used with towed streamers;

**FIG. 3** is a schematic plan view of seismic equipment attached to a seismic streamer; and

**FIG. 4** is a schematic side view of seismic equipment attached under a seismic streamer.

While the invention will be described in connection with its preferred embodiments, it will be understood that the invention is not limited to these. On the contrary, the invention is intended to cover all alternatives, modifications, and equivalents that may be included within the scope of the invention, as defined by the appended claims.

### DETAILED DESCRIPTION OF THE INVENTION

The invention is a system and a method for protecting towed marine seismic equipment from shark bite. The following discussion of the invention will be illustrated in terms of towed seismic streamers, but this is not a limitation of the invention. Any form of seismic equipment that can and is towed through the water and is vulnerable to shark bite is considered appropriate for application of the present invention.

Sharks have highly developed sensory systems and a large area of the brain assigned to processing sensory information. It is believed that at longer distances (greater than 15 meters), sharks depend upon their highly sensitive smell receptors. It is further believed that at shorter distances (less than 15 meters), sharks depend upon their sight, which is adapted to use all available light in the dimly lit water. When close enough, sharks may take an exploratory bite to taste whether the potential target is nutritious enough to expend energy on killing. Sharks also have acute hearing, especially sensitive to low frequency vibrations. Sharks, as do all fish, have a lateral line that is sensitive to vibrations and subtle changes in water movement around them. Thus, shark repellents have included such efforts as chemical repellants, visual devices, underwater acoustic playback systems, and electrical shock emitters. However, the effectiveness of these methods has been limited.

Sharks, however, have an additional sensory organ, known as the ampullae of Lorenzini, which is a group of specialized sensory receptors that can pick up weak electric signals given off by all living organisms. A shark repellent that operates on the electrical sensitivity of this sensory system can be employed to protect towed marine seismic equipment from shark bite. This shark repellent comprises electropositive metals, which appear to over stimulate the ampullae of Lorenzini found in sharks and other elasmobranches, causing the sharks to retreat.

An electropositive metal is a metal which readily donates electrons to form positive ions. The most electropositive metals tend to be found on the left-hand side of the periodic table of the elements, particularly in groups 1 (alkali earth metals), 2 (alkaline earth metals), 3 (transition metals), and the lanthanides (rare earth metals). In general, elctropositivity decreases as one transitions from the left-hand to the right-hand side of the periodic table of the elements. Elements from groups 4 and greater do not appear to have strong enough electropositivity to repel elasmobranches effectively.

Although all highly electropositive metals might be considered for shark repellent applications, practical considerations preclude some of these metals. These considerations include, but are not limited to, safety, corrosion, and cost. Some pure alkali metals (such as sodium, potassium, rubidium, and cesium) are extremely reactive in seawater, even explosive, and thus present fire hazards in use and storage. Some alkaline earth metals (such as calcium, strontium, and barium) are also quite reactive in seawater and thus might corrode too quickly for practical application, while beryllium is toxic. Many of the late lanthanide metals (particularly europium, gadolinium, terbium, dysprosium, holmium, erbium, thulium, ytterbium, and lutetium) would work, but are quite expensive in pure form. Some of the electropositive metals (such as promethium, radium, and francium) are too radioactive to be usable.

Thus, the most promising electropositive metals for consideration for use in the invention include, but are not limited to, the lanthanide metals lanthanum, cerium, neodymium, praseodymium, and samarium; the alkali metal lithium; the alkaline metal magnesium; and the group 3 metals scandium and yttrium.

Additional electropositive metals that are appropriate for consideration for use in the invention include, but are not limited to, mischmetals (mixtures) of the lanthanide metals cerium, lanthanum, neodymium, and praseodymium. In particular, neodymium-praseodymium mischmetal is a preferred electropositive metal for use in the invention because of its relatively low cost and low corrosion reactivity in seawater, compared to many of the other available choices.

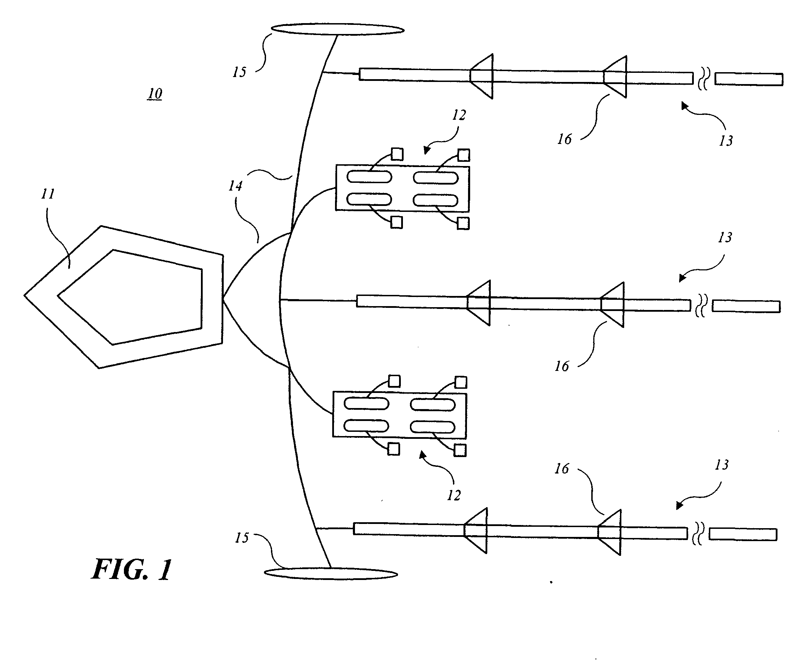

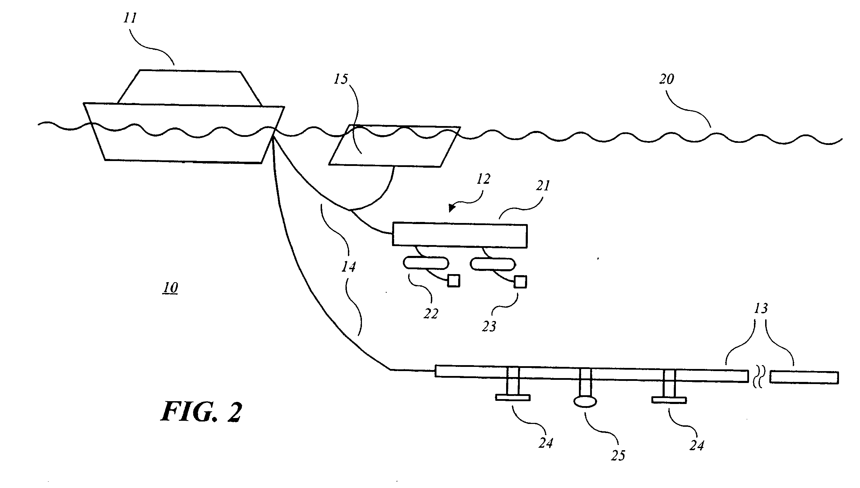

**FIGS. 1** and **2** show the typical types of towed marine seismic equipment that can be protected from shark bite by various embodiments of the apparatus and method of the invention. **FIG. 1** is a schematic plan view (not drawn to scale) of marine seismic survey invention. **FIG. 1** is a schematic plan view (not drawn to scale) of marine seismic survey equipment that could be used with towed streamers.

The towed marine seismic equipment is generally designated by reference numeral **10.** A seismic vessel **11** tows seismic sources **12** and seismic streamers **13.** Although only two seismic sources **12** and three seismic streamers **13** are shown, this number is just for illustrative purposes only. Typically, there can be more seismic sources **12** and many more seismic streamers **13.** The seismic sources **12** and the seismic streamers **13** are connected to the seismic vessel **11** by cables **14.** The cables **14** are typically further connected to devices such as deflectors **15** that spread apart the seismic streamers **13.** **FIG.** 1 shows that the seismic streamers **13** may have equipment attached inline or around the streamers **13.** The attached equipment can be, by way of example, in-line mounted position control devices **16,** such as depth control devices or lateral control devices, as well as acoustic units and retriever units (not shown). The attached equipment also can be, by way of example, sensors of various types, such as depth sensors.

**FIG. 2** is a schematic side view (not drawn to scale) of marine seismic survey equipment, including towed streamers. **FIG. 2** is a side view that corresponds to the plan view of the towed marine seismic equipment shown in **FIG. 1****.**

The seismic vessel **11** tows seismic sources **12** and seismic streamers **13** under the water surface **20.** The seismic sources **12** primarily comprise floats **21** and air guns **22,** but may also have equipment such as, for example, near-field sensors (hydrophones) **23** attached adjacent the air guns **22.** **FIG. 2** shows that the seismic streamers **13** may have additional equipment attached below the streamers **13.** The attached equipment can be, by way of example, suspended position control devices **24** and suspended sensors **25,** as well as acoustic units and retriever units.

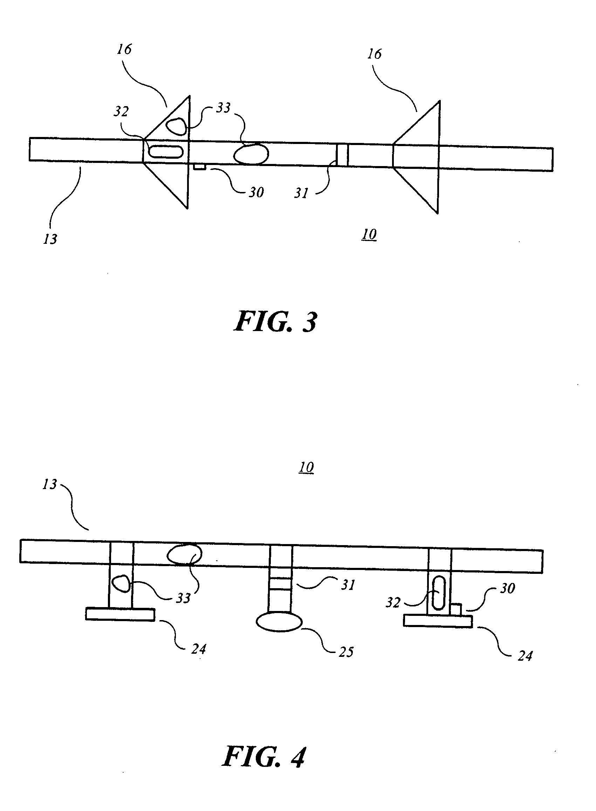

**FIGS. 3** and **4** show close-up views of the seismic equipment attached to the seismic streamer in **FIGS.** 1 and **2****,** respectively. **FIG. 3** is a schematic plan view (not drawn to scale) of seismic equipment attached to a seismic streamer.

Electropositive metals are attached to the towed marine seismic equipment **10.** In one comparative example, the electropositive metal is configured as an ingot **30** attached to the inline position control devices 16 or the seismic streamer **13.** The ingot 30 can be in any shape appropriate for easy attachment. In another comparative example, the electropositive metal is configured as a band **31** attached around an appropriate portion of the inline position control devices **16** or the seismic streamer **13.** In another comparative example, the electropositive metal is configured as a patch **32** attached to the inline position control devices **16** or the seismic streamer **13.** The patch **32** could be, for example, an adhesive patch, or attached by other means such as Velcro, but these methods of attachment are not meant as limitations of the invention. In an embodiment, the electropositive metal is configured as a surface coating **33** covering a portion of the inline position control devices **16** or the seismic streamer **13.** These configurations of the electropositive metal shown here in **FIGS.** 3 and **4** are for illustrative purposes only and are not meant to limit the invention. The electropositive metal of the invention can be configured in any appropriate manner and attached in any appropriate manner to any appropriate portion of the towed marine seismic equipment **10.**

**FIG.** 4 is a schematic side view (not drawn to scale) of seismic equipment **attached** under a seismic streamer. As in **FIG.** 3 above, the electropositive metal is shown attached to the towed marine seismic equipment 10 in the comparative examples of an ingot **30,** band **31,** patch **32,** and in an embodiment of the invention as a surface covering **33,** and attached to appropriate portions of the suspended position control devices **24,** suspended sensors **25** or seismic streamers **13.** Other configurations of the electropositive metal are possible and compatible with the invention.

It should be understood that the preceding is merely a detailed description of specific embodiments of this invention and that numerous changes, modifications, and alternatives to the disclosed embodiments can be made in accordance with the disclosure here without departing from the scope of the invention. The preceding description, therefore, is not meant to limit the scope of the invention. Rather, the scope of the invention is to be determined only by the appended claims and their equivalents.

## Claims

1. A system for protecting towed marine seismic equipment (10) from shark bite, comprising:
marine seismic equipment (10) adapted for towing through a body of water; and
wherein
an electropositive metal is attached to the marine seismic equipment (10), wherein the attached electropositive metal is configured as a surface coating (33).

2. The system of claim 1, wherein the marine seismic equipment (10) comprises towed marine seismic streamers (13).

3. The system of claim 2, wherein the marine seismic equipment (10) further comprises additional equipment (24, 25) attached to the marine seismic streamers (13).

4. The system of any of claims 1 to 3, wherein the marine seismic equipment (10) comprises marine seismic sources (12).

5. A method for protecting marine seismic equipment from shark bite, comprising:
towing marine seismic equipment (10);
wherein
having an electropositive metal attached thereto, wherein the attached electropositive metal is configured as a surface coating (33).

6. The method of claim 5, wherein the marine seismic equipment (10) is constructed according to any of the preceding claims 1 to 4.

## Patentansprüche

1. System zum Schützen geschleppter mariner seismischer Ausrüstung (10) gegen Haibisse, umfassend:
marine seismische Ausrüstung (10), die zum Schleppen durch ein Gewässer eingerichtet ist, und
wobei
ein elektropositives Metall an der marinen seismischen Ausrüstung (10) angebracht ist, wobei das angebrachte elektropositive Metall als Oberflächenbeschichtung (33) konfiguriert ist.

2. System nach Anspruch 1, wobei die marine seismische Ausrüstung (10) geschleppte marine seismische Streamer (13) umfasst.

3. System nach Anspruch 2, wobei die marine seismische Ausrüstung (10) ferner zusätzliche Ausrüstung (24, 25) umfasst, die an den marinen seismischen Streamern (13) angebracht ist.

4. System nach einem der Ansprüche 1 bis 3, wobei die marine seismische Ausrüstung (10) marine seismische Quellen (12) umfasst.

5. Verfahren zum Schützen mariner seismischer Ausrüstung gegen Haibisse, umfassend:
Schleppen von mariner seismischer Ausrüstung (10),
wobei
ein elektropositives Metall daran angebracht ist, wobei das angebrachte elektropositive Metall als Oberflächenbeschichtung (33) konfiguriert ist.

6. Verfahren nach Anspruch 5, wobei die marine seismische Ausrüstung (10) nach einem der vorhergehenden Ansprüche 1 bis 4 aufgebaut ist.

## Revendications

1. Système de protection d'un équipement sismique marin remorqué (10) vis-à-vis d'une morsure de requin, comprenant :
un équipement sismique marin (10) adapté pour être remorqué à travers une masse d'eau ; et
dans lequel
un métal électropositif est fixé à l'équipement sismique marin (10), dans lequel le métal électropositif fixé est configuré comme un revêtement de surface (33).

2. Système selon la revendication 1, dans lequel l'équipement sismique marin (10) comprend des flûtes sismiques marines remorquées (13).

3. Système selon la revendication 2, dans lequel l'équipement sismique marin (10) comprend en outre de l'équipement supplémentaire (24, 25) fixé aux flûtes sismiques marines (13).

4. Système selon l'une quelconque des revendications 1 à 3, dans lequel l'équipement sismique marin (10) comprend des sources sismiques marines (12).

5. Procédé de protection d'un équipement sismique marin vis-à-vis d'une morsure de requin, comprenant :
le remorquage d'un équipement sismique marin (10) ;
dans lequel
l'équipement a un métal électropositif qui lui est fixé, dans lequel le métal électropositif fixé est configuré comme un revêtement de surface (33).

6. Procédé selon la revendication 5, dans lequel l'équipement sismique marin (10) est construit selon l'une quelconque des revendications 1 à 4 précédentes.
